# EUROPEAN PATENT SPECIFICATION

(11) **EP 0 815 360 B1**
(45) Date of publication and mention of the grant of the patent: **08.08.2001**
(21) Application number: 96905766.0
(22) Date of filing: 19.03.1996
(51) Int. Cl.: F04B 39/02, F04C 29/02

(54) **A HERMETICALLY ENCAPSULATED REFRIGERANT COMPRESSOR**
HERMETISCH EINGESCHLOSSENER KOMPRESSOR
COMPRESSEUR DROGORIFIQUE ENCAPSULE DANS UNE ENVELOPPE HERMETIQUE

(30) Priority: 20.03.1995 DE 19510015
(43) Date of publication of application: 07.01.1998
(73) Proprietor: DANFOSS COMPRESSORS GmbH, 24904 Flensburg (DE)
(72) Inventor: NISSEN, Harry, Stentoft, DK-6400 Sonderborg (DK); OUTZEN, Svend, Erik, DK-6400 Sonderborg (DK); WORM, Olaf, D-24363 Torp (DE)
(74) Representative: Nissen, Georg
(86) International application number: DK9600109
(87) International publication number: WO9629516

(56) References cited:
- PATENT ABSTRACTS OF JAPAN, Vol. 9, No. 275, M-426; & JP,A,60 119 389, (TOSHIBA K.K.), 26 June 1985.
- PATENT ABSTRACTS OF JAPAN, Vol. 10, No. 44, M-455; & JP,A,60 195 391, (MATSUSHITA DENKI SANGYO K.K.), 3 October 1985.
- DERWENT'S ABSTRACT, No. 87-161992/23, Week 8723; & SU,A,1 265 395, (KUZMICH A P), 23 October 1986.
- DERWENT'S ABSTRACT, No. 89-346759/47, Week 8947; & SU,A,1 460 411, (GABAIDULLIN V S), 23 February 1989.

## Description

The invention relates to a hermetically encapsulated refrigerant compressor with an oil pump, the compressor having a motor that has a stator and a rotor, which motor drives a hollow shaft, the facing end of which is immersed in an oil sump.

Hermetically encapsulated refrigerant compressors and their motors must, like most rotating machines, be lubricated during operation. For that purpose, an oil supply, also referred to as an oil sump, is generally provided inside the housing surrounding the refrigerant compressor. The oil used for lubricating is drawn from that oil sump and supplied to the bearing sites at which lubrication is required. From there, the oil flows back into the oil sump under the effect of gravity.

A very frequently used method for lubricating such compressors is described in DE-OS 16 28 156. The lower facing end of the hollow shaft is tapered. That tapered end is immersed in the oil sump. When the shaft is turned, the oil is displaced outwards under the effect of centrifugal force and then moves upwards along the inner wall of the hollow shaft under the pressure of the oil being conveyed behind it. Such a method has proved its worth. It is only adequate, however, for lubricating compressors that operate at a sufficiently high speed. The height to which the oil is delivered depends on the speed and on the ratio between the largest and smallest radius inside the hollow shaft. The difference between those two radii may not, however, be increased at will for reasons associated with constructional size.

A different type of lubrication is known from US 3,034,004. There, the shaft is no longer of hollow construction but is solid. Arranged on its outside are grooves that extend helically to a certain height. In that region the shaft is surrounded by a hollow cylinder. The lower end of the shaft is immersed in the oil sump. When the shaft rotates, the oil is conveyed upwards in the helical grooves. With this method, however, delivery to only relatively small heights can be obtained. As a result of the fact that the shaft of the remainder of the rotor must be surrounded, at least in the region of the helical grooves, by a tube, the arrangement becomes too unstable if the tube, and therefore the height of delivery, becomes too large. For that reason, in the known arrangement, the most important bearings and the compressor are arranged below the motor. While this provides lubrication, a second function that the oil normally ought to assume, that is to say cooling the motor, is not, in this case, practicable.

WO 93/22557 discloses a similar construction in which the rotor has a shaft which is provided, in its lower region that is immersed in the oil sump, with helical grooves. The shaft is surrounded by a tube which extends a little way into the rotor. In that case also, delivery to only a relatively small height can be obtained. At the outlet of the helical groove, the oil is under only relatively low pressure. The tube which extends into the rotor can be sealed with respect thereto only with difficulty. The known arrangement is also designed to be suitable for relatively low speeds of down to approximately 900 revolutions per minute.

The tendency in the development of refrigerating units, for example, refrigerators or deep-freezers, is towards insulating them better and better in order to keep energy consumption low. In normal operation, therefore, only a relatively low compressor output is required. When such refrigerating units are filled with chilled or frozen goods, however, a larger output may be required of the compressor for a short time. One way of solving that problem is to equip the compressor with speed control. In normal operation, the compressor then runs at a very low speed, which may easily lie well below 900 revolutions per minute. Only when a higher output requirement arises is the compressor operated at a higher speed. While lubrication within the higher speed range can be effected by conventional means without difficulty, it is within the lower speed range, in normal operation, that lubrication problems occur.

The problem underlying the invention is to provide an oil pump that enables a compressor to be operated even at speeds of well below 900 revolutions per minute.

That function is made possible in a compressor of the type mentioned at the outset, where the displacement body passes axially through the motor, and the oil transportation path extends through the motor to the compressor, and where the stator and the displacement body have a common bearing arrangement.

In that case, the displacement body can, at the same time, act as a bearing for the rotor. This stabilises the shaft of the rotor.

As the shaft turns in relation to the displacement body, the oil is entrained by friction and is gradually conveyed upwards because the oil mainly follows the helical oil transportation path. That principle is known per se from US 3,034,004 or WO 93/22557. In contrast to the pumps disclosed therein, in the present pump, there is not, in practice, a limit to the height of delivery. The shaft rotates together with the rotor. It may even be attached thereto. Stability problems owing to that attachment being broken, as arose for instance in the prior art because of the required tube, cannot arise in this case. The displacement body remains stationary. Surprisingly, however, the necessary movement of the oil in the helically-running oil transportation path is obtained. This is attributed to the fact that the oil is entrained, at least on one side of the oil transportation path, by a moving wall. The frictional energy is sufficient to provide the desired movement of the oil. Since the oil is conveyed or driven along the full length of the helical oil transportation path, the oil is conveyed to the desired point without it being necessary to build up a point of higher pressure from which the oil can rise. Leakage problems can also be kept small. Even if oil can flow down again between the shaft and the displacement body because, with moving parts, it is never possible to make the fit infinitely tight, this is acceptable because the remaining transportation energy provided by the turning shaft is sufficient to convey enough oil to the desired positions. Such a pump operates also at relatively low speeds of approximately 600 rev/min or even less. Tests have shown that even at speeds of less than 200 rev/min, enough oil can be conveyed to the sites to be lubricated.

As the displacement body passes through the motor axially, the oil can be conveyed through the entire motor. It is therefore in a position not only to lubricate the individual bearing points; it can also dissipate some of the heat generated in the motor.

In a preferred construction, the oil transportation path is in the form of several, especially three, helical grooves extending in parallel and which are arranged offset in relation to one another in the circumferential direction by predetermined angles. With several oil transportation paths arranged parallel to one another, the transportation capacity can be greatly increased. Certainly, as a result, the sealing areas between individual walls of the oil transportation path become smaller. This reduces sealing slightly. The amount of oil conveyed is not necessarily the multiple corresponding to the number of grooves. The amount of oil conveyed in several grooves is, however, considerably greater than that conveyed in only one groove.

Preferably the shaft has at least one discharge opening arranged in one bearing region. There, the shaft again acts as a centrifugal pump. The oil that has been conveyed to the discharge opening by the helical oil transportation path is then forced outwards by centrifugal force and is taken to the bearing region. Since the oil, however, in this case, no longer needs to be conveyed upwards against gravity, a low speed is also sufficient to transfer the necessary transportation power to the oil.

It is especially preferred that the discharge opening is connected to a lubricating channel. By way of the lubricating channel, the oil can be taken directly to the desired bearing site. The acceleration exerted on the oil by centrifugal force as the shaft turns is sufficient to drive the oil far enough into the lubricating channel.

In an especially preferred construction, the shaft tapers towards its facing end at least on the inside, the displacement body having a retaining part that is guided through the end opening of that shaft. That construction combines the principle of conveying oil by a helical transportation path and the principle of conveying oil by centrifugal force. In the region of the facing end, in which the inside of the shaft is tapered, the oil is forced outwards by centrifugal force. It then moves up the tapering slope inside the shaft. That centrifugal force can be exploited even at low speeds. It is, however, generally not sufficient for overcoming any significant heights. That is, however, not necessary in the present case because the principle of delivery by using the helical transportation path takes over even after just a small height and transports the oil further. This, however, has the advantage that the oil is fed into the start of the transportation path at a little pressure so that its further transportation can take place with a head start. Since the displacement body must conform in some way or other to conditions, it is very often no longer possible to take the helical grooves, which form the transportation path, as far as the facing end. This is, however, not necessary, because in that region the oil is conveyed by centrifugal force. However, the displacement body can be held firmly by means of a retaining part. Essentially, that needs to safeguard the displacement body only against rotation.

It is especially preferred that the tapering of the facing end of the shaft be in the form of an insert which is arranged to be axially displaceable in the shaft. The delivery capacity of the centrifugal pump can then be adapted to different requirements by simply exchanging the inserts. For that purpose, the insert is simply inserted into or set onto the shaft axially. Furthermore, that construction enables easy adaptation to different models, in which the distance between the motor and the oil sump may be different in size.

It is especially preferred that retaining means be provided which hold the insert in a defined position in relation to the oil sump. The result is that the insert is always immersed in the oil sump even if the motor is allowed to move axially. Such movement is sometimes unavoidable if the suspension of the motor and/or the compressor in the housing is to be as yielding as possible for reasons concerning noise generation. Even in the event of an axial movement of the motor, oil is always reliably drawn in and conveyed further.

Preferably the retaining means are arranged inside the oil sump. This provides continuous lubrication between the retaining means and the insert.

It is also preferred that the retaining part be of flexible construction for taking up bending stresses.

In that case, shifting of the motor in its housing, that is to say in relation to its suspension, is also permissible. Such shifting of the motor is unavoidable in many cases if the suspension is of suitably yielding construction. Such movement is, however, not critical as a result of the flexible construction of the retaining part.

The invention is described hereinafter with reference to preferred embodiments, in conjunction with the drawings, in which:
- Fig. 1: is a schematic cross-section through a refrigerant compressor having an oil pump,
- Fig. 2: is a schematic section through a second construction of the oil pump, and
- Fig. 3: is a schematic section through a third construction of the oil pump.

A refrigerant compressor 1 has an electric motor 2 which has a stator 3 and a rotor 4 which is received rotatably therein. The stator 3 is mounted resiliently by way of a suspension 5 in a housing 6 which at the same time forms a hermetically-sealed capsule for the refrigerant compressor 1. Electrical connections 7 for the electric motor 2 are provided in a customary manner.

The rotor 4 is connected to a hollow shaft 8 so that they rotate together, which hollow shaft in turn drives a piston 10 of the actual compressor by way of a crank 9, which piston is moved back and forth in a cylinder 11 when the shaft 8 is turned. The shaft 8 is in turn mounted in a bearing 12 which is in turn again connected to the stator 3 of the motor 2.

The shaft 8 has a hollow interior. In other words, the shaft 8 is in the form of a hollow cylinder. Arranged inside it is a displacement body 13 which is likewise in the form of a cylinder, the outer diameter of the displacement body 13 matching the inner diameter of the shaft 8. Both parts lie as closely together as possible. In the circumferential surface of the displacement body 13, a helical circumferential groove 14 is provided which is covered over by the shaft 8.

In the lower portion of the housing 6, an oil sump 15 is provided, into which the facing end 16 of the shaft 8 is immersed. The displacement body 13 is likewise immersed therein. The displacement body 13 is secured to the stator 3 by way of an arm 17. The arm 17 can be secured, for example by means of screws 18 or rivets, to the stator 3 in such a manner that the rotor 4 and the displacement body 13 are arranged in a defined relationship to each other. The arm 17 holds the displacement body 13 securely so that it remains stationary.

In the region of its bearing, the shaft 8 has a discharge opening 19, through which oil can pass into the region of the shaft bearing arrangement in the bearing 12. The discharge opening 19 can also be connected, in a manner not shown, to a lubricating channel so that the oil can flow onwards purposefully.

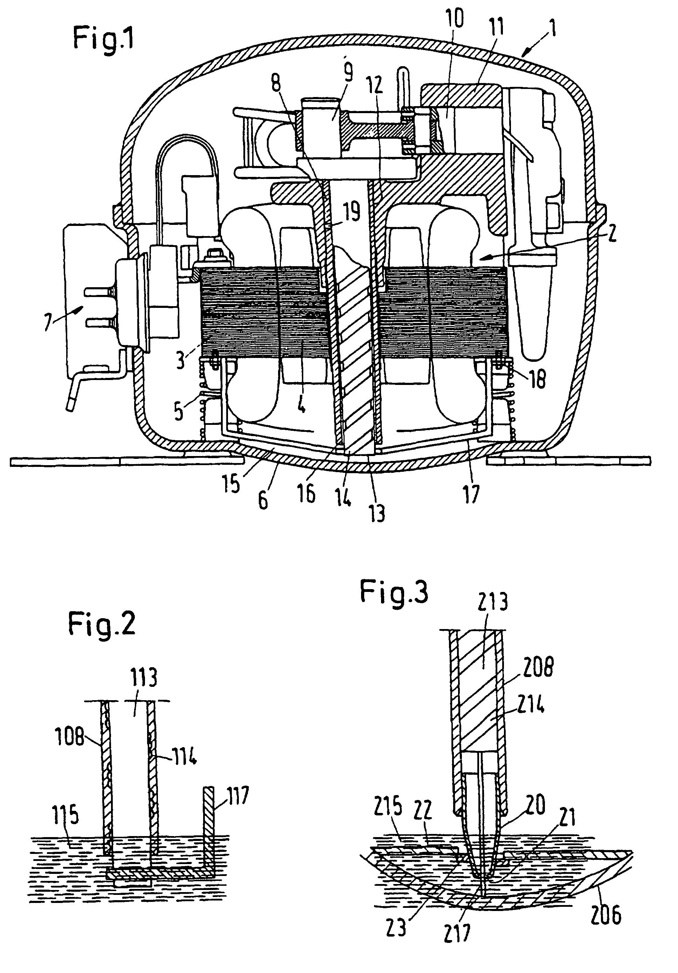

The pump functions as follows: as the rotor 4 turns in relation to the stator 3, the shaft 8 also turns in relation to the displacement body 13. If turning is effected in the clockwise direction (in Fig. 1, viewed from below), oil is drawn, by friction, from the oil sump 15 through the helical groove 14, which there forms the oil transportation path. As a result of the force arising from the angle of inclination, the oil is conveyed not only in the circumferential direction around the displacement body 13 but also upwards against the direction of gravity. Since the displacement body 13 and the shaft 8 extend right through the rotor 3 of the motor 2, oil can be conveyed right through the entire motor as far as the crank 9 which drives the piston 10 in the cylinder 11. On its path through the motor 2, the oil can also absorb a certain amount of heat from the motor 2. Sealing problems are virtually non-existent. A certain amount of oil leakage between the displacement body 13 and the shaft 8 is permissible because oil is still conveyed in sufficient amounts. A significant build-up of pressure is not necessary. Rather, the oil can flow onwards from the end point of the oil transportation path, which is formed by the groove 14, to individual lubrication sites almost without being under any pressure.

Fig. 2 shows an alternative construction in which parts which correspond to those in Fig. 1 are provided with reference numbers that have been increased by 100.

Whilst the circumferential grooves 14 in the construction according to Fig. 1 are arranged in the outer surface of the displacement body 13, the outer surface of the displacement body 113 in the construction according to Fig. 2 is smooth. Grooves 114 are provided instead on the inner surface of the shaft 108.

Furthermore, there is no longer merely a single circumferential groove; three circumferential grooves 114 are provided which are connected to one another in parallel. Accordingly, by movement of the shaft 108 in relation to the displacement body 113, a larger amount of oil is conveyed upwards from the oil sump 115. Even if that amount does not correspond to three times the amount of oil conveyed by a single groove 14, it is still considerably larger than in the case of a single groove.

Fig. 3 shows a third construction in which parts that correspond to those in Fig. 1 are provided with reference numerals that have been increased by 200.

Here, the end face of the shaft 208 is provided with an insert 20, the insert being inserted into the hollow interior of the shaft 208 so as to be axially displaceable.

The insert 20 is tapered at its facing end, that is to say the end remote from the shaft 208, which tapered end, in turn, has an opening 21 in its tip. The retaining part 217 which secures the displacement body 213 in the shaft 208 is guided through that opening 21.

Furthermore, retaining means 22 are provided which cooperate with a circumferential projection 23 on the insert 20 and allow rotation of the insert 20 and also slight lateral displacement of the insert 20, but prevent the insert 20 from moving axially out of the oil sump 215.

The arm 217 is of flexible construction. It therefore allows a certain displacement of the shaft 208 in relation to the housing 206.

In that construction, the insert 20 acts as a centrifugal pump. That centrifugal pump must overcome only a relatively small height. As soon as the oil reaches the displacement body 213, its further transportation is taken over by the relative movement between the shaft 208 and the displacement body 213.

The retaining means 22 and the projection 23 are arranged inside the oil sump 215. This provides permanent lubrication of the parts moving therein.

With an oil pump of any one of the constructions shown in Figs. 1 to 3, it is possible for the oil to be conveyed reliably even when relatively low speeds are used, which may drop to approximately 200 or even 100 rev/min. With the construction according to Fig. 3, even movements of the motor 2 in relation to the housing 6 are permissible without fear of the suction opening 21 being pulled out of the oil sump 215.

## Claims

1. A hermetically encapsulated refrigerant compressor having a motor (2) that has a stator (3) and a rotor (4), which motor drives a vertical hollow shaft (8; 108; 208), whose facing end is immersed in an oil sump (15), a stationary displacement body (13; 113; 213) being arranged inside the hollow shaft (8; 108; 208), a substantially helically-running circumferential oil transportation path (14; 114; 214) being arranged between the displacement body (13; 113; 213) and the shaft (8; 108; 208), characterized in that the displacement body (13; 113; 213) passes axially through the motor (2), said oil transportation path (14; 114; 214) extends through the motor (2) to the compressor (9, 10, 11), and the stator (3) and the displacement body (13) have a common bearing arrangement (6, 17).

2. A compressor according to claim 1, characterized in that the oil transportation path (14; 214) is formed by several, especially three, helical grooves (114), extending in parallel, which are arranged offset in relation to one another in the circumferential direction by predetermined angles.

3. A compressor according to claim 1 or 2, characterized in that the shaft (8) has at least one discharge opening (19) arranged in one bearing region (12).

4. A compressor according to claim 3, characterized in that the discharge opening (19) is connected to a lubricating channel.

5. A compressor according to any one of claims 1 to 4, characterized in that the shaft (208) tapers towards its facing end at least on the inside, the displacement body (213) having a retaining part (217) which is guided through the end opening (21) of the shaft (208).

6. A compressor according to claim 5, characterized in that the tapering of the facing end of the shaft (208) is in the form of an insert (20) which is arranged to be axially displaceable in the shaft (208).

7. A compressor according to claim 6, characterized in that retaining means (22, 23) are provided which hold the insert (20) in a defined position in relation to the oil sump (215).

8. A compressor according to claim 7, characterized in that the retaining means (22, 23) are arranged in the oil sump (215).

9. A compressor according to any one of claims 5 to 8, characterized in that the retaining part (217) is of flexible construction for taking up bending stresses.

## Patentansprüche

1. Ein hermetisch gekapselter Kältemittelkompressor, mit einem einen Stator (3) und einen Rotor (4) aufweisenden Motor (2), der eine vertikale hohle Welle (8; 108; 208) antreibt, die mit ihrem stirnseitigen Ende in einen Ölsumpf (15) eintaucht, wobei im Innern der hohlen Welle (8; 108; 208) ein stillstehender Verdrängerkörper (13; 113; 213), und zwischen dem Verdrängerkörper (13; 113; 213) und der Welle (8; 108; 208) ein im wesentlichen schraubenlinienförmig verlaufender Öltransportpfad (14; 114; 214) angeordnet ist, dadurch gekennzeichnet, dass der Verdrängerkörper (13; 113; 213) den Motor (2) axial durchsetzt, dass der Öltransportpfad (14; 114; 214) durch den Motor (2) zum Kompressor (9, 10, 11) verläuft und dass der Stator (3) und der Verdrängerkörper (13) eine gemeinsame Lagereinrichtung (6; 17) aufweisen.

2. Kompressor nach Anspruch 1, dadurch gekennzeichnet, dass der Öltransportpfad (14; 214) durch mehrere, insbesondere drei, parallelgeführte schraubenlinienförmige Nuten (114) gebildet ist, die in Umfangsrichtung um vorbestimmte Winkel zueinander versetzt angeordnet sind.

3. Kompressor nach Anspruch 1 oder 2, dadurch gekennzeichnet, dass die Welle (8) mindestens eine in einem Lagerbereich (12) angeordnete Ausströmöffnung (19) aufweist.

4. Kompressor nach Anspruch 3, dadurch gekennzeichnet, dass die Ausströmöffnung (19) mit einem Schmierkanal in Verbindung steht.

5. Kompressor nach einem der Ansprüche 1 bis 4, dadurch gekennzeichnet, dass die Welle (208) sich zu ihrem stirnseitigen Ende hin zumindest in ihrem Innern verjüngt, wobei der Verdrängerkörper (213) ein Halteteil (217) aufweist, das durch die stirnseitige Öffnung (21) der Welle (208) geführt ist.

6. Kompressor nach Anspruch 5, dadurch gekennzeichnet, dass die Verjüngung des stirnseitigen Endes der Welle (208) in einem Einsatz (20) ausgebildet ist, der in der Welle (208) axial verschiebbar angeordnet ist.

7. Kompressor nach Anspruch 6, dadurch gekennzeichnet, dass Haltemittel (22, 23) vorgesehen sind, die den Einsatz (20) in einer definierten Lage zum Ölsumpf (215) halten.

8. Kompressor nach Anspruch 7, dadurch gekennzeichnet, dass die Haltemittel (22, 23) innerhalb des Ölsumpfs (215) angeordnet sind.

9. Kompressor nach einem der Ansprüche 5 bis 8, dadurch gekennzeichnet, dass das Halteteil (217) zur Aufnahme von Biegebeanspruchungen flexibel ausgebildet ist.

## Revendications

1. Compresseur frigorifique à enveloppe hermétique ayant un moteur (2) pourvu d'un stator (3) et d'un rotor (4), lequel moteur entraîne une colonne verticale creuse (8 ; 108 ; 208) dont l'extrémité avant est plongée dans une bâche (15) d'huile, un corps de compression fixe (13 ; 113 ; 213) étant disposé à l'intérieur de la colonne creuse (8 ; 108 ; 208), un circuit (14 ; 114 ; 214) de transport circonférentiel d'huile sensiblement hélicoïdal étant disposé entre le corps de compression (13 ; 113 ; 213) et la colonne (8 ; 108 ; 208), caractérisé en ce que le corps de compression (13 ; 113 ; 213) passe de manière axiale à travers le moteur (2), ledit circuit (14 ; 114 ; 214) de transport d'huile traverse le moteur (2) et atteint le compresseur (9, 10, 11), et le stator (3) et le corps de compression (13) ont un système de palier commun (6, 17).

2. Compresseur selon la revendication 1, caractérisé en ce que le circuit (14 ; 214) de transport d'huile est constitué par plusieurs, en particulier trois, gorges hélicoïdales (114) parallèles, décalées entre elles suivant des angles prédéterminés dans la direction circonférentielle.

3. Compresseur selon la revendication 1 ou 2, caractérisé en ce que la colonne (8) a au moins un orifice de refoulement (19) ménagé dans une région (12) de palier.

4. Compresseur selon la revendication 3, caractérisé en ce que l'orifice de refoulement (19) est relié à un conduit de lubrification.

5. Compresseur selon l'une quelconque des revendications 1 à 4, caractérisé en ce que la colonne (208), au moins à l'intérieur, présente une forme conique se resserrant vers son extrémité avant, le corps de compression (213) ayant une pièce de retenue (217) guidée à travers l'ouverture (21) d'extrémité de la colonne (208).

6. Compresseur selon la revendication 5, caractérisé en ce que la conicité de l'extrémité avant de la colonne (208) se présente sous la forme d'un élément rapporté (20) conçu pour pouvoir se déplacer de manière axiale dans la colonne (208).

7. Compresseur selon la revendication 6, caractérisé en ce que des moyens de retenue (22, 23) sont prévus pour retenir l'élément rapporté (20) dans une position définie par rapport à la bâche (215) d'huile.

8. Compresseur selon la revendication 7, caractérisé en ce que les moyens de retenue (22, 23) sont disposés dans la bâche (215) d'huile.

9. Compresseur selon l'une quelconque des revendications 5 à 8, caractérisé en ce que la pièce de retenue (217) a une structure flexible pour absorber les contraintes de flexion.
